# EUROPÄISCHE PATENTANMELDUNG

(11) **EP 4 811 613 A1**
(43) Veröffentlichungstag der Anmeldung: **23.09.2026**
(21) Anmeldenummer: 25165076.8
(22) Anmeldetag: 20.03.2025
(51) Int. Cl.: H02K 1/32, H02K 9/06, H02K 9/193

(54) **ELEKTRISCHE MASCHINE MIT INTEGRIERTER KÜHLUNG UND VORRICHTUNG MIT ELEKTRISCHER MASCHINE**

(71) Anmelder: Gardner Denver Deutschland GmbH, 97616 Bad Neustadt an der Saale (DE)
(72) Erfinder: GÜNTHER, Christian, 97616 Bad Neustadt an der Saale (DE); MICHAUX, Arthur, 97723 Thulba (DE); RJABCHENKO, Evgenij Borisovic, 97616 Salz (DE); ATALAR, Anil Berk, 97616 Bad Neustadt an der Saale (DE); KEMPF, Mario, 97616 Bad Neustadt a.d.Saale - Herschfeld (DE); DILLER, Florian, 97618 Hollstadt (DE)
(74) Vertreter: Murgitroyd & Company

(57) **Zusammenfassung**

Die Erfindung betrifft eine elektrische Maschine (1) mit Kühlung. Ferner betrifft die Erfindung eine Vorrichtung umfassend mindestens eine elektrische Maschine (1).

## Beschreibung

Die Erfindung betrifft eine elektrische Maschine mit Kühlung. Ferner betrifft die Erfindung eine Vorrichtung umfassend mindestens eine elektrische Maschine.

Elektrische Maschinen sind seit jeher bekannt. Zur Kühlung wird meist ein am Rotor angebrachter Lüfter verwendet.

Nachteilig an den aus dem Stand der Technik bekannten elektrischen Maschinen ist, dass der Wirkungsgrad der Kühlung oftmals unzureichend ist und Kühlvorrichtungen mit hohen Wartungs- und Instandhaltungskosten verbunden sind. Ferner treten hohe Temperaturgradienten auf, die sich beispielsweise schädlich auf die Kugellager auswirken können, was dann zu einem Lagerschaden oder Lagerausfall führt.

Die der Erfindung zugrundeliegende Aufgabe ist es daher, die aus dem Stand der Technik bekannten Nachteile zu überwinden.

Die Aufgabe wird gelöst mit einer elektrischen Maschine mit integrierter Kühlung oder Kühlvorrichtung gemäß Anspruch 1, mit
- einem Rotor umfassend eine Hohlwelle, ein Laufrad und eine Kühlscheibe, die zwischen einem ersten Ende der Hohlwelle und dem Laufrad angeordnet ist,
- einem Stator,
- Fluidkanälen im Stator, und
- einem ersten Fluidraum, in dem die Kühlscheibe drehbar angeordnet ist,

wobei zur Ausbildung eines Kühlkreislaufes die elektrische Maschine neben der Hohlwelle die Kühlscheibe, den ersten Fluidraum und die Fluidkanäle umfasst, und
wobei die Kühlscheibe infolge Drehung des Rotors eingerichtet ist, Fluid durch die Hohlwelle anzusaugen bzw. zu saugen und durch die Kühlscheibe, den ersten Fluidraum und weiter durch die Fluidkanäle zu fördern.

Mit anderen Worten ist die Kühlscheibe infolge Drehung des Rotors eingerichtet ist, Fluid durch die Hohlwelle anzusaugen bzw. zu saugen und weiter durch den Stator zu fördern. Ein entsprechendes Ansaugen erfolgt oder resultiert aus der Strömungsmechanik gemäß Euler Arbeit oder Eulerscher Gleichung.

Unter einer Hohlwelle kann eine Rotorwelle oder Welle mit axialer Bohrung verstanden werden. Die Hohlwelle ist vorzugweise hohlzylindrisch bzw. Hohlzylinder-förmig ausgebildet.

Unter einer Kühlscheibe kann eine Scheibe verstanden werden, die radial geführte Durchgangsöffnungen aufweist. Hierdurch ist es möglich Fluid durch die Kühlscheibe zu fördern. Die Kühlscheibe kann infolge Rotation des Rotors eingerichtet sein, fluidsaugend oder fluidfördernd zu sein. Mit anderen Worten kommt der Kühlscheibe eine Saugwirkung zugute. Weiter kann die Kühlscheibe über ihre Oberfläche eine Kühlung oder Abkühlung zu erzeugen.

Unter einem Laufrad kann ein Impeller verstanden werden. Das Laufrad kann radial angeordnete Schaufeln oder einen Kranz von Schaufeln umfassen.

Das Laufrad ist über die Kühlscheibe mit dem ersten Ende der Hohlwelle verbunden. Die Komponenten können lösbar miteinander verbunden sein. Alternativ können die Komponenten nicht lösbar miteinander verbunden sein. Vorzugsweise sind sie form- und/oder kraftschlüssig miteinander verbunden. Bevorzugt bilden das Laufrad, die Kühlscheibe und die erste Hohlwelle eine Kupplung aus.

Unter einem Rotor kann der sich drehende bzw. rotierende Teil einer elektrischen Maschine verstanden werden. Ferner kann unter dem Rotor ein Läufer verstanden werden. Unter einem Stator kann ein feststehender, unbeweglicher Teil einer elektrischen Maschine verstanden werden. Der Stator steht damit im Gegensatz zu dem mechanisch beweglichen Teil, dem Rotor. Vorzugsweise umfasst der Stator die Spule(n) bzw. Induktionsspule(n) und der Rotor den Magnet oder Magnete oder umgekehrt. Bevorzugt ist die elektrische Maschine ein Induktionsmotor.

Ist der Rotor in Drehung befindet sich die elektrische Maschine im Betriebszustand oder im aktivierten Zustand.

Unter einem Fluid kann Luft, ein Gas, ein Gasgemisch oder eine Flüssigkeit verstanden werden. Unter einem Fluidkanal kann eine Leitung oder Fluidförderleitung zur Fluidförderung verstanden werden. Unter Fluidförderung kann ein Fluidleiten oder Fluidweiterleiten verstanden werden.

Unter einem Fluidraum kann ein Abschnitt im Stator verstanden werden, der zur Weiterleitung oder Weiterförderung des Fluids aus der Kühlscheibe eingerichtet ist. Vorzugsweise ist der Fluidraum ein Kühlraum.

Unter fördern kann ansaugen, weiterleiten oder transportieren verstanden werden. Unter einem Ansaugen durch die Hohlwelle kann ein Ansaugen oder eine Fluidförderung von einem zweiten Ende der Hohlwelle in Richtung zum ersten Ende der Hohlwelle verstanden werden.

Vorzugsweise ist eine Kühlhülse zwischen der Kühlscheibe und der Hohlwelle angeordnet. Die Kühlhülse kann eingerichtet sein, die Kühlscheibe und die Hohlwelle vom Laufrad zu entkoppeln. Ferner kann die Kühlhülse eingerichtet sein, wärme- oder hitzeempfindliche Komponenten, wie Wellenringdichtungen oder Kugellager zu entkoppeln. Weiter kann die Kühlhülse, die in Kontakt mit der Kühlscheibe ist, eingerichtet sein, zur zusätzlichen Abkühlung der angrenzenden Bauteile beizutragen. Bevorzugt weist die Kühlhülse Öffnungen auf, um eine Fluidförderung von der Hohlwelle zur Kühlscheibe zu ermöglichen.

Mit der Kühlscheibe der elektrischen Maschine ist es möglich, zum einen die Rotorwelle und empfindliche Rotorkomponenten, wie Magnete oder Kugellager abzukühlen. Zum anderen entkoppelt die Kühlscheibe ein möglicherweise sehr heißes Laufrad von der Welle. Eine Kühlung des erwärmten oder erhitzten Fluids erfolgt dann insbesondere im kühleren Stator.

Mittels der elektrischen Maschine ist es auch möglich, die vom Laufrad infolge äußerer Temperatureinwirkung auf das Laufrad aufgenommene Hitze- oder Wärme an die Kühlscheibe und folglich an das passierende Fluid abzugeben, um infolge Rotation des Rotors die Temperatur innerhalb der elektrischen Maschine, insbesondere der Rotorwelle und die empfindlichen Rotorkomponenten, wie Magnete und Kugellager, auf erträgliches Temperaturniveau abzusenken. Unter einem erträglichen Temperaturniveau kann ein Temperaturbereich bis 100°C verstanden werden.

In einer ersten bevorzugten Ausführungsform umfasst die elektrische Maschine zur Ausbildung eines geschlossenen Kühlkreislaufes einen zweiten Fluidraum, der an Enden der Fluidkanäle angeordnet ist, und wobei die Kühlscheibe infolge Drehung des Rotors weiter eingerichtet ist, das Fluid durch die Fluidkanäle oder aus den Fluidkanälen weiter durch den zweiten Fluidraum und wieder durch die Hohlwelle zu oder zurückzufördern.

Alternativ ist an jedem Ende der Fluidkanäle eine Auslassöffnung und mindestens eine Einlassöffnung in oder an einem Deckel der elektrischen Maschine angeordnet, wobei jeweils eine Leitung eine Auslassöffnung mit der Einlassöffnung verbindet und wobei die Kühlscheibe infolge Drehung des Rotors weiter eingerichtet ist, das Fluid aus den Fluidkanälen durch die jeweilige Leitung und von der Leitung weiter durch die Hohlwelle zu fördern.

Hierdurch ist es möglich einen Kühlkreislauf zu erzeugen, der in sich geschlossen ist und eine Fluidzirkulation im Rotor und im Stator erlaubt, um insbesondere die Rotorwelle und die empfindlichen Rotorkomponenten, wie Magnete und Kugellager zu kühlen.

Vorzugsweise ist eine Einlassöffnung ausreichend sämtliche Leitungen daran anzuschließen bzw. zu koppeln.

Wie oben erwähnt, ist die Kühlscheibe infolge Drehung des Rotors eingerichtet, Fluid durch die Hohlwelle anzusaugen bzw. zu saugen. Vorzugsweise ist der zweite Fluidraum mit dem zweiten Ende der Hohlwelle verbunden.

In einer alternativen bevorzugten Ausführungsform umfasst die elektrische Maschine zur Ausbildung eines offenen Kühlkreislaufes Auslassöffnungen und mindestens eine Einlassöffnung in einem Deckel der elektrischen Maschine, wobei die Kühlscheibe infolge Drehung des Rotors weiter eingerichtet ist,
- das Fluid durch die Fluidkanäle aus der elektrischen Maschine zu fördern oder das Fluid aus den Fluidkanälen weiter durch die Auslassöffnungen, die an Enden der Fluidkanäle oder im bzw. am Deckel angeordnet sind, zu fördern, und
- frisches Fluid von außerhalb der elektrischen Maschine durch mindestens eine Einlassöffnung durch die Hohlwelle zu fördern oder anzusaugen.

Hierdurch ist es möglich einen Kühlkreislauf zu erzeugen, der offen ist. Beim Fördern des Fluids aus der elektrischen Maschine gemäß erster Alternative kann auf eine Bohrung durch den Stator verzichtet werden. Gemäß zweiter Alternative wird eine Fluidzirkulation im Rotor und im Stator erlaubt, wobei eine Frischluftzufuhr über die mindestens eine Einlassöffnung erfolgt, um insbesondere die Rotorwelle und die empfindlichen Rotorkomponenten, wie Magnete und Kugellager zu kühlen.

Die Auslassöffnung dient dem Fluid zur Förderung aus der elektrischen Maschine. Die Einlassöffnung dient weiterem, frischem Fluid zur Förderung oder zum Ansaugen in die elektrische Maschine.

Unter frischem Fluid wird ein Fluid verstanden, das nicht dem Fluid entspricht, das aus der elektrischen Maschine abgegeben bzw. ausgestoßen wurde. Insbesondere kann unter frischem Fluid ein Fluid von außerhalb der Maschine verstanden werden oder ein Fluid, das eine Temperatur aufweist, die geringer ist, als die des Fluid, das die elektrische Maschine über die Auslassöffnung verlässt.

Vorzugsweise ist die Hohlwelle zwischen dem ersten Hohlraum und dem zweiten Hohlraum angeordnet ist und die Fluidkanäle die Hohlräume verbinden.

In einer weiteren bevorzugten Ausführungsform ist die Kühlscheibe eingerichtet, Abwärme, die am Laufrad infolge äußerer Hitze- oder Wärmeeinwirkung entsteht, an das Fluid abzugeben bzw. zu übertragen, wobei die Kühlscheibe infolge Drehung des Rotors, der erste Fluidraum, die Fluidkanäle und/oder der zweite Fluidraum eingerichtet sind, das erhitzte oder erwärmte Fluid abzukühlen, vorzugsweise schrittweise abzukühlen.

Hierdurch ist es möglich die Abwärme vom Fluid aufzunehmen und abzutransportieren bzw. zum Abkühlen auszutragen. Abwärme am Laufrad kann aus äußerer Hitze- oder Wärmeeinwirkung am Laufrad und/oder insbesondere im Betrieb mit einem Rezirkulationsgebläse für Brennstoffzellen entstehen. Hier kann das Fluid oder Gas das mit dem Laufrad in Kontakt ist oder steht Temperaturen von bis zu 200°Caufweisen, vorzugsweise auch höher bis zu 250°C.

Mitunter kann auch der Bereich am ersten Ende der Hohlwelle eine Erwärmung erfahren oder aufnehmen. Vorzugsweise ist die Kühlhülse zwischen der Kühlscheibe und der Hohlwelle angeordnet, um eine Erwärmung zu reduzieren,

In einer weiteren bevorzugten Ausführungsform sind die Fluidkanäle parallel zur Hohlwelle in der elektrischen Maschine angeordnet. Mit anderen Worten ist eine Längserstreckung der Fluidkanäle parallel zur Längserstreckung der Hohlwelle.

Alternativ können die Fluidkanäle orthogonal oder schräg zur Hohlwelle in der elektrischen Maschine, vorzugsweise im Stator, angeordnet sein. Unter schräg kann ein stumpfer oder spitzer Winkel, den die Fluidkanäle mit der Hohlwelle ausbilden, verstanden werden.

In einer besonders bevorzugten Ausführungsform ist die Anzahl der Fluidkanäle größer/gleich als 2, vorzugsweise größer/gleich 12, bevorzugt größer/gleich 18.

Mit 2 Fluidkanälen ist es möglich ein Mindestmaß an Kühlung zu erzeigen. Mit 12 Fluidkanälen ist es möglich eine ausreichende Kühlung zu erzeugen. Mit 18 Fluidkanälen ist es möglich eine optimale Kühlung zu erzeugen.

In einer weiteren bevorzugten Ausführungsform weist die Kühlscheibe radiale Fluideintrittsöffnungen und radiale und/oder axiale Fluidaustrittsöffnungen auf.

Mittels der radial angeordneten Fluideintrittsöffnungen es möglich das Fluid, das sich in der Hohlwelle befindet, radial anzusaugen und das Fluid aus der Kühlscheibe zu fördern. Mittels der axial angeordneten Fluidaustrittsöffnungen ist es möglich das Fluid aus der Kühlscheibe zu fördern und gleichzeitig einen verstärkten Kühleffekt auf der Oberfläche der Kühlscheibe zu erzeugen. Vorzugsweise sind die axialen Fluidaustrittsöffnungen randseitig der Kühlscheibe angeordnet. Bevorzugt weist die Kühlscheibe beidseitig axiale Fluidaustrittsöffnungen auf. Hierdurch lässt sich der Kühleffekt an der Oberfläche der Kühlscheibe zusätzlich verbessern.

Vorzugsweise weist das Laufrad radial angeordnete Leitbleche, Schaufeln oder Führungselemente auf.

In einer weiteren bevorzugten Ausführungsform ist die Kühlscheibe infolge Drehung des Rotors eingerichtet, eine Fluidförderung resultierend aus Euler Arbeit oder Eulerscher Gleichung zu erzeugen oder zu generieren.

Damit macht sich die Kühlscheibe die Drehung des Rotors zu nutze. Über die Euler Arbeit (spezifische Arbeit = delta(Umfangsgeschwindigkeit der Luft*Umfangsgeschwindigkeit der Kühlscheibe)) findet ein Druckaufbau von innen nach außen statt. Dadurch wird das Fluid durch die Welle gesaugt und durch die Fluidkanäle durch den Stator zurückgedrückt. In Summe erhöht damit die elektrische Maschine den Wärmeübergang aus dem rotierenden System in das nicht rotierende System und entkoppelt thermisch heiße von den empfindlichen Rotorkomponenten (wie z.B., Magnete, Kugellagerinnenring, Kugellagerfett).

In einer weiteren besonders bevorzugten Ausführungsform ist die elektrische Maschine eingerichtet, eine Temperatur im Bereich von bis zu 180°C im Bereich der Kühlscheibe, infolge Abwärme, die am Laufrad infolge äußerer Hitze- oder Wärmeeinwirkung entsteht, auf bis zu 60°C in den Fluidkanälen und vorzugweise in wenigstens einem der Fluidräume und weiter vorzugsweise in der Hohlwelle zu reduzieren oder abzukühlen.

Hierdurch lässt sich eine für die empfindlichen Komponenten des Rotors ausreichende Abkühlung erreichen. Eine Reduzierung kann schrittweise oder kontinuierlich erfolgen.

Ferner wird die Aufgabe wird gelöst mit einer Vorrichtung gemäß Anspruch 10, umfassend mindestens eine elektrische Maschine, wie oben beschrieben.

Vorzugsweise kann die Vorrichtung auch ein Rezirkulationsgebläse für Brennstoffzellen aufweisen. Bei Verwendung der elektrischen Maschine in einem Rezirkulationsgebläse für Brennstoffzellen kann eine hohe Temperatur im Bereich von ungefähr 180°C am Laufrad auftreten. Mittels der elektrischen Maschine ist es möglich, die vom Laufrad aufgenommene Wärme an die Kühlscheibe und folglich an das passierende Fluid abzugeben, um infolge Rotation des Rotors die Temperatur innerhalb der elektrischen Maschine, insbesondere der Rotorwelle und die empfindlichen Rotorkomponenten, wie Magnete und Kugellager, auf erträgliches Temperaturniveau abzusenken. Unter einem erträglichen Temperaturniveau kann ein Temperaturbereich von bis zu 100°C verstanden werden.

Die in der vorliegenden Beschreibung, in den Figuren, sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

Die Erfindung wird nachfolgend anhand Figuren und Beispiele näher beschrieben, ohne dass diese den Schutzbereich der Ansprüche beschränken sollen. Es stellen dar:
Fig. 1 eine Ausführungsform der erfindungsgemäßen elektrischen Maschine in einer Schnittdarstellung;
Fig. 2 eine Ausführungsform der erfindungsgemäßen elektrischen Maschine aus Fig. 1 mit einem geschlossenen Fluidkreislauf;
Fig. 3 eine weitere Ausführungsform der erfindungsgemäßen elektrischen Maschine aus Fig. 1 mit einem offenen Fluidkreislauf;
Fig. 4 eine alternative Ausführungsform der erfindungsgemäßen elektrischen Maschine mit einem geschlossenen Fluidkreislauf;
Fig. 5 eine alternative Ausführungsform der erfindungsgemäßen elektrischen Maschine mit einem offenen Fluidkreislauf;
Fig. 6 die Ausführungsform der erfindungsgemäßen elektrischen Maschine aus Fig. 1 mit Details A und B;
Fig. 7 das Detail A aus Fig. 6; und
Fig. 8 das Detail B aus Fig. 6;

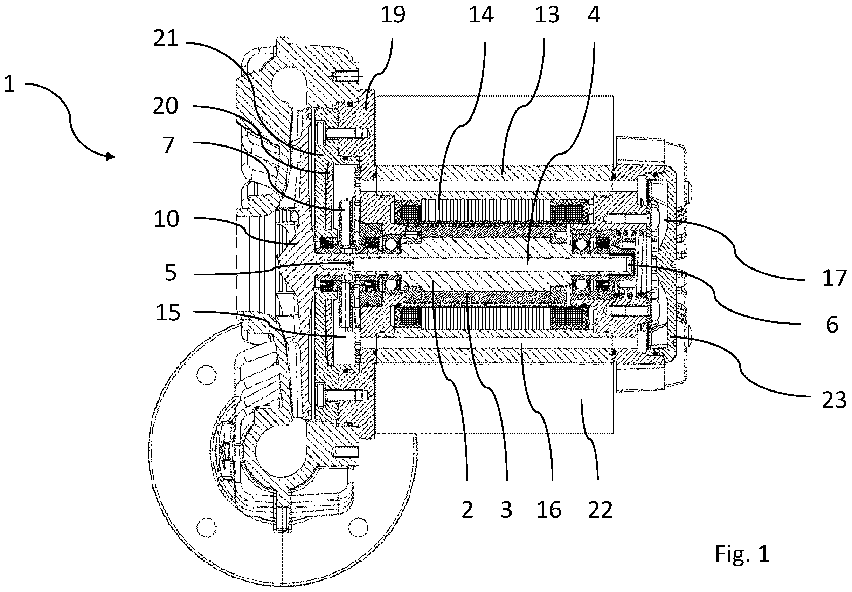

Fig. 1 zeigt eine Ausführungsform der erfindungsgemäßen elektrischen Maschine 1 in einer Schnittdarstellung. Die elektrische Maschine 1 weist einen Rotor 2 mit Magneten 3 und einen Stator 13 mit Spulen 14 auf.

Der Rotor 2 umfasst eine Welle, die als Hohlwelle 4 ausgebildet ist. Die Hohlwelle 4 ist drehbar in der elektrischen Maschine 1 gelagert. Die Hohlwelle 4 ist hohlzylindrisch ausgebildet. Der Rotor 2 umfasst weiter ein Laufrad 10 und eine Kühlscheibe 7. Die Kühlscheibe 7 ist zwischen einem ersten Ende 5 der Hohlwelle 4 und dem Laufrad 10 angeordnet. Dabei sind sowohl das Laufrad 10, die Kühlscheibe 9 als auch die Hohlwelle 4 miteinander verbunden. Die Verbindung der drei Komponenten kann als feste Kupplung verstanden werden. Die Komponenten sind vorzugsweise lösbar oder alternativ nicht lösbar miteinander verbunden.

Im Stator 13 sind Fluidkanäle 16 angeordnet. Ferner weist die elektrische Maschine 1 eine ersten Fluidraum 15 auf. Im ersten Fluidraum 15 ist die Kühlscheibe 7 drehbar angeordnet.

Ferner weist die elektrische Maschine 1 ein Lagerschild 19, eine Scheibe 20 und einen ersten Deckel 21 auf. Zwischen dem Lagerschild 19 und der Scheibe 20 ist der erste Fluidraum 15 angeordnet. Wie oben bereits erwähnt, befindet sich die Kühlscheibe 7 im ersten Fluidraum 15. Der erste Deckel 21 ist zwischen dem Lagerschild 19 und dem Laufrad 10 angeordnet. Ein zweiter Deckel 23 schließt die elektrische Maschine 1 zur anderen Seite hin ab.

Zur Ausbildung eines Kühlkreislaufes umfasst die elektrische Maschine 1 neben der Hohlwelle 4 die Kühlscheibe 7, den ersten Fluidraum 15 und die Fluidkanäle 16. Als Fluid kommt insbesondere Luft zum Einsatz. Jedoch kann auch ein Gas, ein Gasgemisch oder eine Flüssigkeit Verwendung finden.

Der Rotor 2 ist eingerichtet, im Betriebszustand mit drehender Kühlscheibe 7, Fluid durch die Hohlwelle 4 von einem zweiten Ende 6 der Hohlwelle 4 aus in Richtung zum ersten Ende 5 der Hohlwelle 4 anzusaugen und zu den Fluidkanälen 16 weiter zu fördern. Ein entsprechendes Ansaugen erfolgt oder resultiert aus der Strömungsmechanik gemäß Euler Arbeit oder Eulersche Gleichung.

Es ist selbstredend, dass eine Drehung des Rotors 2 einhergeht mit einer Drehung des Laufrads 10, der Kühlscheibe 7 und der Hohlwelle 4. Das Laufrad 10 weist radial angeordnete Leitbleche, Schaufeln oder Führungselemente auf.

Ferner kann die elektrische Maschine 1 zur Ausbildung eines geschlossenen Kühlkreislaufes einen zweiten Fluidraum 17 aufweisen. Der zweite Fluidraum 17 ist an den Enden der Fluidkanäle 16 angeordnet. Infolge der Drehung des Rotors 2 und damit der Kühlscheibe 7, ist die Kühlscheibe 7 weiter eingerichtet, das Fluid durch die Kühlscheibe 7 den ersten Fluidraum 15, die Fluidkanäle 16, den zweiten Fluidraum 17 und die Hohlwelle 4 zu fördern.

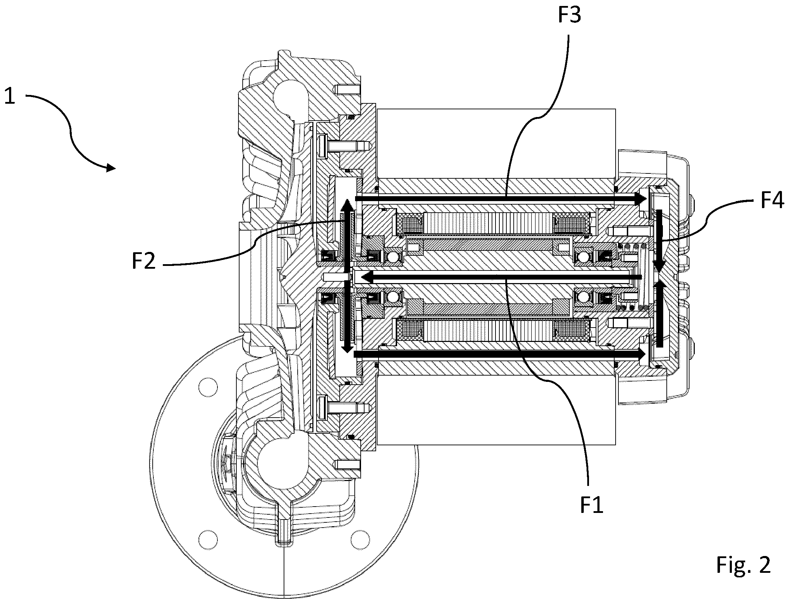

Hierdurch ist es möglich einen Kühlkreislauf zu erzeugen, der in sich geschlossen ist und eine Fluidzirkulation im Rotor 2 und im Stator 13 erlaubt, um insbesondere die Rotorwelle 4 und die empfindlichen Rotorkomponenten, wie Magnete und Kugellager zu kühlen. Ein geschlossener Kühlkreislauf ist bspw. in der Fig. 2 gezeigt.

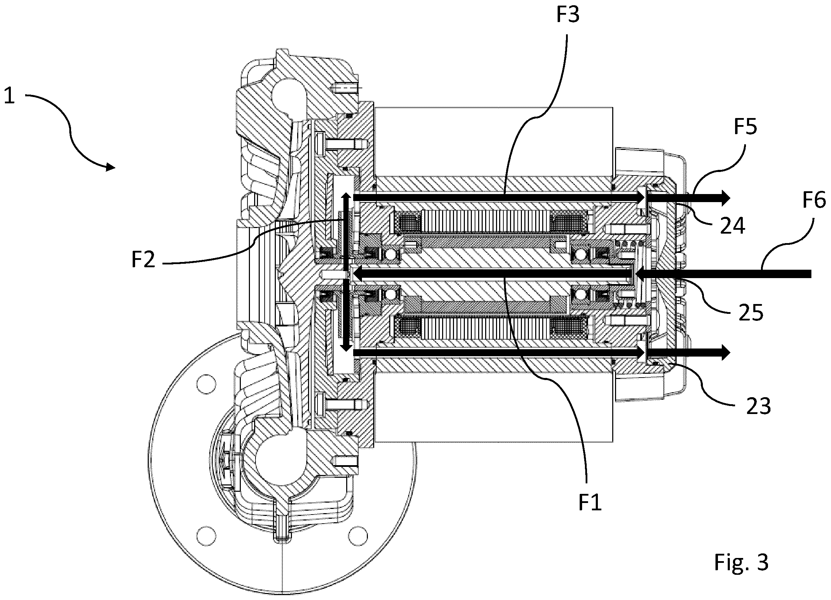

Alternativ kann die elektrische Maschine 1 zur Ausbildung eines offenen Kühlkreislaufes Auslassöffnungen 24 und mindestens eine Einlassöffnung 25 im zweiten Deckel 23 der elektrischen Maschine 1 aufweisen (Verweis auf die Fig. 3). Die Kühlscheibe 7 ist infolge Drehung des Rotors 2 weiter eingerichtet, das Fluid durch die Kühlscheibe 7, den ersten Fluidraum 15, die Fluidkanäle 16 und aus den Auslassöffnungen 24, die an Enden der Fluidkanäle 16 im Deckel 23 angeordnet sind, zu fördern. Ferner ist die Kühlscheibe 7 infolge Drehung des Rotors 2 weiter eingerichtet, frisches Fluid von außerhalb der elektrische Maschine 1 durch mindestens eine Einlassöffnung 25 durch die Hohlwelle 4 anzusaugen.

Hierdurch ist es möglich einen Kühlkreislauf zu erzeugen, der offen ist und eine Fluidzirkulation im Rotor 2 und im Stator 13 erlaubt, wobei ein Fluidaustrag über die Auslassöffnung 24 erfolgt und ein Fluideintrag, bspw. in Form von Frischluftzufuhr, über die Einlassöffnung 25 erfolgt, um insbesondere die Rotorwelle 4 und die empfindlichen Rotorkomponenten, wie Magnete und Kugellager zu kühlen.

Unter frischem Fluid kann ein Fluid von außerhalb der Maschine verstanden werden oder ein Fluid, das eine Temperatur aufweist, die geringer ist, als die des Fluid, das die elektrische Maschine 1 über die Auslassöffnung 24 verlässt. Ein offener Kühlkreislauf ist in der Fig. 3 gezeigt.

Die Kühlscheibe 7 ist eingerichtet, Abwärme, die am Laufrad 10 infolge äußerer Hitze- oder Wärmeeinwirkung entsteht, an das Fluid abzugeben. An der Kühlscheibe 7 können Temperaturen von weiter über 100°C auftreten, die vom zirkulierenden Fluidfluss reduziert werden müssen. Die sich in Drehung befindliche Kühlscheibe 7, der erste Fluidraum 15, die Fluidkanäle 16 und der zweite Fluidraum 17 sind eingerichtet, das erhitzte Fluid schrittweise abzukühlen.

Die Fluidkanäle 16 sind parallel zur Hohlwelle 4 in der elektrischen Maschine 1 angeordnet. Obgleich im Schnitt nur 2 Fluidkanäle 16 gezeigt sind, sind vorliegend wenigstens 12 Fluidkanäle 16 im Stator 13 der elektrischen Maschine angeordnet, um eine ausreichende Kühlung des Fluids zu erzielen.

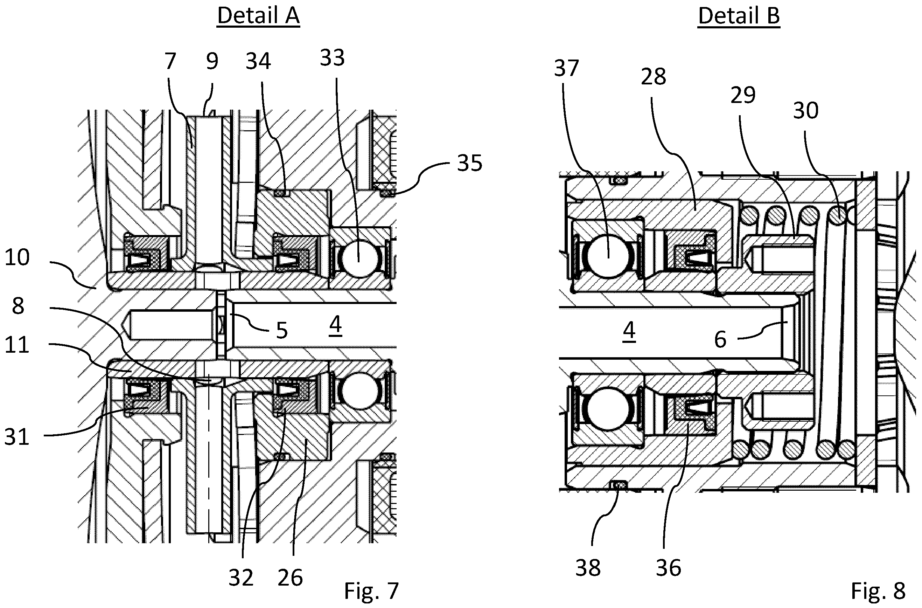

Die Kühlscheibe 7 weist radiale Fluideintrittsöffnungen 8 (Verweis auf Fig. 7) und radiale (Verweis auf Fig. 7) Fluidaustrittsöffnungen 9 auf. Hierdurch lässt sich der Fluidfluss auf einfache Weise realisieren. Mittels der radial angeordneten Fluideintrittsöffnungen 8 wird das Fluid, das sich in der Hohlwelle 4 befindet angesaugt. Mittels der radial angeordneten Fluidaustrittsöffnungen 9 ist es möglich das Fluid aus der Kühlscheibe 7 zu fördern.

Ferner sind axiale Fluidaustrittsöffnungen (nicht gezeigt) an der Kühlscheibe 7 beidseitig und randseitig der Kühlscheibe 7 angeordnet. Mit den axiale Fluidaustrittsöffnungen ist es möglich das Fluid aus der Kühlscheibe 7 zu fördern und gleichzeitig einen verstärkten Kühleffekt auf der Oberfläche der Kühlscheibe 7 zu erzeugen.

Die Kühlscheibe 7 ist eingerichtet, infolge Drehung des Rotors 2, eine Fluidförderung resultierend aus Euler Arbeit oder Eulersche Gleichung zu erzeugen. Somit ist es möglich das Fluid, das sich in der Hohlwelle 4 befindet, anzusaugen und entsprechend weiterzuleiten.

Zusammenfassend ist festzuhalten, dass sich die Kühlscheibe 7 die Drehung des Rotors 2 zu Nutze mach, wobei über die Euler Arbeit oder Euler-Gleichung ein Druckaufbau von innen nach außen stattfindet. Dadurch wird das Fluid durch die Hohlwelle 4 gesaugt und durch die Fluidkanäle 16 durch den Stator 13 gefördert.

In Summe erhöht damit die elektrische Maschine den Wärmeübergang aus dem rotierenden System in das nicht rotierende System und entkoppelt thermisch heiße von den empfindlichen Rotorkomponenten (wie bspw. Magnete, Kugellager, Kugellagerinnenring, Kugellagerfett, etc.).

Die elektrische Maschine 1 kann bspw. eingerichtet sein, eine Temperatur im Bereich von bis zu 180°C im Bereich der Kühlscheibe 7, infolge Abwärme, die am Laufrad 10 infolge äußerer Hitze- oder Wärmeeinwirkung entsteht, auf bis zu 60°C in den Fluidkanälen 16, und vorzugweise in wenigstens einem der Fluidräume 15, 17 und in der Hohlwelle 4 zu reduzieren. Hierdurch lässt sich eine für die empfindlichen Komponenten des Rotors 2 ausreichende Abkühlung erreichen.

Fig. 2 zeigt eine Ausführungsform der erfindungsgemäßen elektrischen Maschine aus Fig. 1 mit einem geschlossenen Fluidkreislauf.

Der Pfeil F1 zeigt die Fluidrichtung durch die Hohlwelle 4, der Pfeil F2 zeigt die Fluidrichtung durch die Kühlscheibe 7 und den ersten Fluidraum 15, der Pfeil F3 zeigt die Fluidrichtung durch den Fluidkanal 16 und der Pfeil F4 zeigt die Fluidrichtung durch den zweiten Fluidraum 17 hin zum zur Hohlwelle 4. Die Fig. 2 verdeutlicht damit den oben erwähnten geschlossenen Kühlkreislauf.

Fig. 3 zeigt eine weitere Ausführungsform der erfindungsgemäßen elektrischen Maschine aus Fig. 1 mit einem offenen Fluidkreislauf bzw. Fluidfluss.

Der Pfeil F1 zeigt die Fluidrichtung durch die Hohlwelle 4, der Pfeil F2 zeigt die Fluidrichtung durch die Kühlscheibe 7 und den ersten Fluidraum 15, der Pfeil F3 zeigt die Fluidrichtung durch den Fluidkanal 16, der Pfeil F5 zeigt die Fluidrichtung durch Teile des zweiten Fluidraums 17 und/oder die Auslassöffnung 24 nach außerhalb der elektrischen Maschine 1, wohingegen der Pfeil F6 die Fluidrichtung durch die Einlassöffnung 25 zur Hohlwelle 4 zeigt. Die Fig. 3 verdeutlicht damit den oben erwähnten offenen Kühlkreislauf.

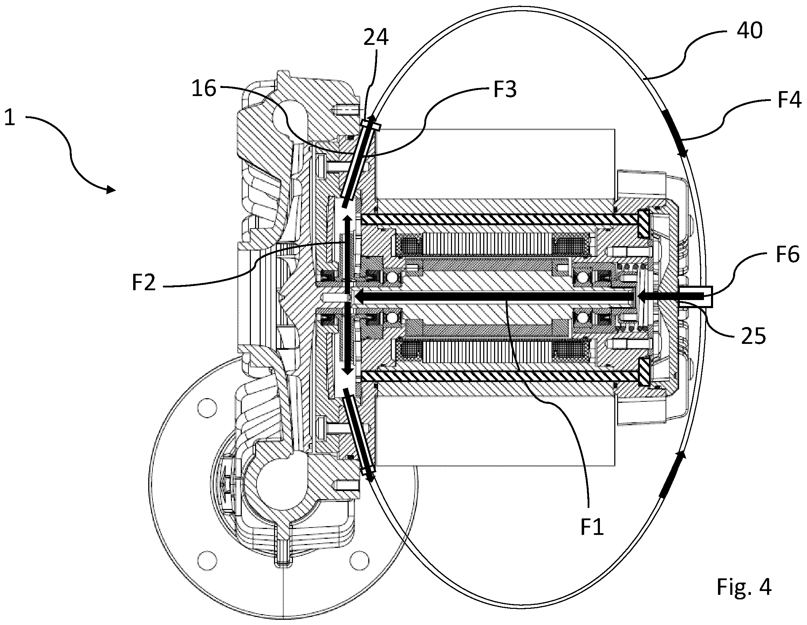

Fig. 4 zeigt eine alternative Ausführungsform der erfindungsgemäßen elektrischen Maschine mit einem geschlossenen Fluidkreislauf.

Im Unterschied zur Fig. 2 ist der Fluidkanal 16 nicht parallel zur Hohlwelle 4 geführt. Vielmehr verläuft er schräg durch Teile des Stators 13. Er kann auch orthogonal zur Hohlwelle 4 verlaufen. An jedem Ende der Fluidkanäle 16 ist eine Auslassöffnung 24 angeordnet. Ferner ist mindestens eine Einlassöffnung 25 im Deckel 23 der elektrischen Maschine 1 angeordnet.

Eine Leitung 40 verbindet jeweils eine Auslassöffnung 24 mit der Einlassöffnung 25. Alle Leitungen sind mit der einen Auslassöffnung 24 verbunden. Die Kühlscheibe 7 ist infolge Drehung des Rotors 2 weiter eingerichtet ist, das Fluid aus den Fluidkanälen 16 weiter durch Leitung 40 und wieder durch die Hohlwelle 4 zu fördern.

Der Pfeil F1 zeigt die Fluidrichtung durch die Hohlwelle 4, der Pfeil F2 zeigt die Fluidrichtung durch die Kühlscheibe 7 und den ersten Fluidraum 15, der Pfeil F3 zeigt die Fluidrichtung durch den Fluidkanal 16 und der Pfeil F4 zeigt die Fluidrichtung durch die Leitung 14 hin zum zur Hohlwelle 4. Da die Fluidkanäle 16 nicht direkt mit dem zweiten Fluidraum 17 in Verbindung stehen, ist der zweite Fluidraum 17 von untergeordneter Bedeutung.

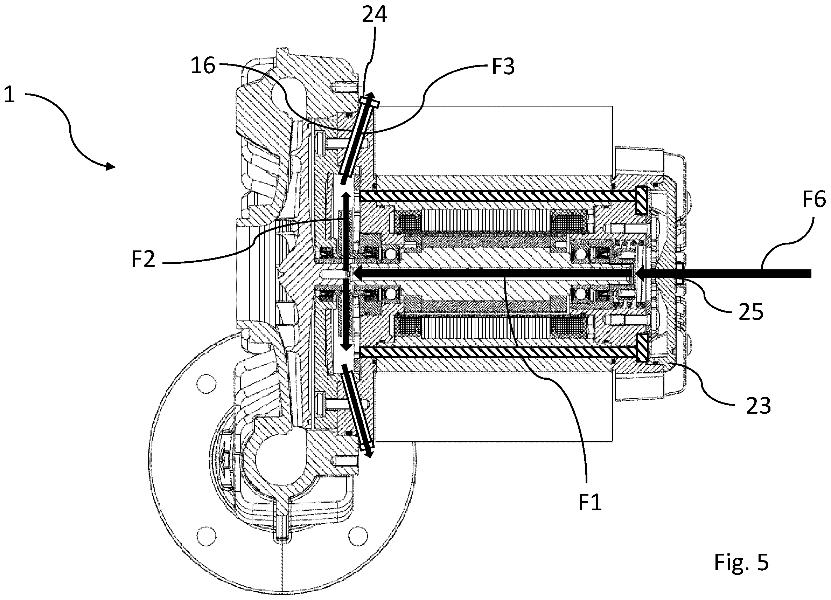

Fig. 5 zeigt eine alternative Ausführungsform der erfindungsgemäßen elektrischen Maschine mit einem offenen Fluidkreislauf bzw. Fluidfluss.

Im Unterschied zur Fig. 4 ist keine Leitung 40 vorhanden.

Der Pfeil F1 zeigt die Fluidrichtung durch die Hohlwelle 4, der Pfeil F2 zeigt die Fluidrichtung durch die Kühlscheibe 7 und den ersten Fluidraum 15, der Pfeil F3 zeigt die Fluidrichtung durch den schräg angeordneten Fluidkanal 16 und durch die Auslassöffnung 24 nach außerhalb der elektrischen Maschine 1, wohingegen der Pfeil F6 die Fluidrichtung durch die Einlassöffnung 25 zur Hohlwelle 4 zeigt. Da die Fluidkanäle 16 nicht direkt mit dem zweiten Fluidraum 17 in Verbindung stehen, ist der zweite Fluidraum 17 von untergeordneter Bedeutung.

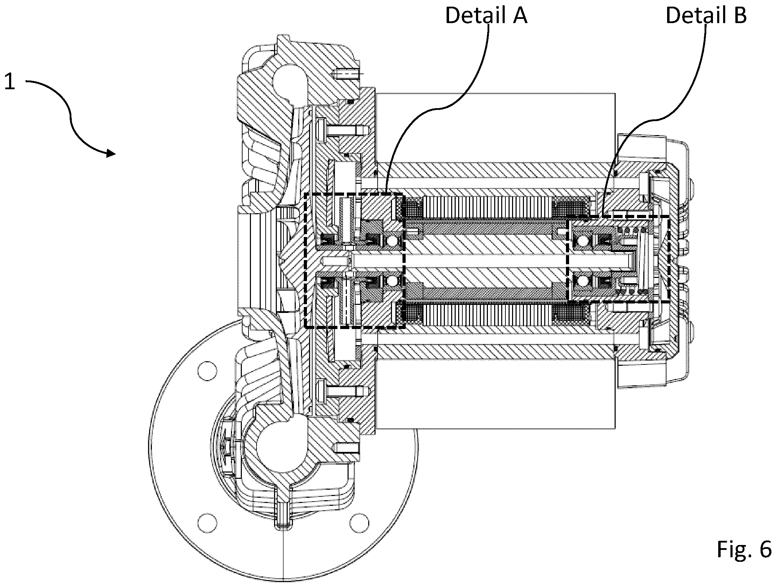

Fig. 6 zeigt die Ausführungsform der erfindungsgemäßen elektrischen Maschine aus Fig. 1 mit den Details A bis D.

Fig. 7 zeigt das Detail A aus Fig. 6. Das Detail A zeigt mitunter eine erste Wellendichtung 31 und eine zweite Wellendichtung 32, die beidseitig der Kühlscheibe 7 angeordnet sind und ein erstes Kugellager 33. Das erste Kugellager 33 dient als Lager zur Drehung der Hohlwelle 4 des Rotors 2. Das erste Kugellager 33 ist zwischen einem Abschnitt der Hohlwelle 4 und dem Lagerschild 19 angeordnet. Die erste Wellendichtung 31 ist zwischen einem Abschnitt der Hohlwelle 4 und einer ersten Hülse 26 angeordnet. Die zweite Wellendichtung 32 ist zwischen einer Kühlhülse 11 und der Scheibe 20 angeordnet. Ferner sind eine erster O-Ring 34 und ein zweiter O-Ring 35 gezeigt.

Die Kühlhülse 11 ist zwischen der Kühlscheibe 7 und der Hohlwelle 4 angeordnet. Hierdurch lässt sich eine zusätzliche Entkopplung der Kühlscheibe 7 und der Hohlwelle 4 vom Laufrad 10 bewerkstelligen. Dabei weist die Kühlhülse 11 Öffnungen auf, um eine Fluidförderung von der Hohlwelle 4 zur Kühlscheibe 7 zu ermöglichen. Ferner werden auch die erste und zweite Wellendichtungen 31, 32 entkoppelt. Weiterhin kühlt die Kühlhülse 11, die in Kontakt mit der Kühlscheibe 7 ist, die sie angrenzenden Bauteile. Bevorzugt weist die Kühlhülse Öffnungen auf, um eine Fluidförderung von der Hohlwelle zur Kühlscheibe zu ermöglichen.

Die erste und zweite Wellendichtungen 31, 32 und das erste Kugellager 33 können als wärme- oder hitzeempfindliche Rotorkomponenten verstanden werden.

Fig. 8 zeigt das Detail B aus Fig. 6. Das Detail B zeigt mitunter eine dritte Wellendichtung 36 und ein zweites Kugellager 37. Das zweite Kugellager 37 dient als Lager zur Drehung der Hohlwelle 4 des Rotors 2. Das zweite Kugellager 37 ist zwischen einem Abschnitt der Hohlwelle 4 und einer Lagerhülse 28 angeordnet. Die dritte Wellendichtung 36 ist zwischen der Lagerhülse 28 und einer zweiten Hülse 27 angeordnet. Ferner sind ein Wuchtring 29, eine Feder 30, die eine Druckkraft auf die Lagerhülse 28 ausübt, und ein dritter O-Ring 38 gezeigt.

Die dritte Wellendichtung 36 und das zweite Kugellager 37 können als wärme- oder hitzeempfindliche Rotorkomponenten verstanden werden.

Mit der elektrischen Maschine ist es möglich, zum einen die Rotorwelle und empfindliche Rotorkomponenten, wie Magnete oder Kugellager abzukühlen. Zum anderen entkoppelt die Kühlscheibe ein möglicherweise sehr heißes Laufrad von der Welle. Eine Kühlung des erwärmten oder erhitzten Fluids erfolgt dann insbesondere im kühleren Stator.

### Bezugszeichenliste

- 1: elektrische Maschine
- 2: Rotor
- 3: Magnet
- 4: Hohlwelle
- 5: erstes Ende
- 6: zweites Ende
- 7: Kühlscheibe
- 8: Fluideintrittsöffnung
- 9: Fluidaustrittsöffnung
- 10: Laufrad (Impeller)
- 11: Kühlhülse
- 12: /
- 13: Stator
- 14: Spule
- 15: erster Fluidraum
- 16: Fluidkanal
- 17: zweiter Fluidraum
- 18: /
- 19: Lagerschild
- 20: Scheibe
- 21: Deckel
- 22: Motorgehäuse
- 23: Deckel
- 24: Auslassöffnung
- 25: Einlassöffnung
- 26: erste Hülse
- 27: zweite Hülse
- 28: Lagerhülse
- 29: Wuchtring
- 30: Feder
- 31: erste Wellendichtung
- 32: zweite Wellendichtung
- 33: erstes Kugellager
- 34: erster O-Ring
- 35: zweiter O-Ring
- 36: dritte Wellendichtung
- 37: zweites Kugellager
- 38: dritter O-Ring
- 39: /
- 40: Leitung

## Patentansprüche

1. Elektrische Maschine (1) mit integrierter Kühlung mit
- einem Rotor (2) umfassend eine Hohlwelle (4), ein Laufrad (10) und eine Kühlscheibe (7), die zwischen einem ersten Ende (5) der Hohlwelle (2) und dem Laufrad (10) angeordnet ist,
- einem Stator (13),
- Fluidkanälen (16) im Stator (13), und
- einem ersten Fluidraum (15), in dem die Kühlscheibe (7) drehbar angeordnet ist,
wobei zur Ausbildung eines Kühlkreislaufes die elektrische Maschine (1) neben der Hohlwelle (4) die Kühlscheibe (7), den ersten Fluidraum (15) und die Fluidkanäle (16) umfasst, und
wobei die Kühlscheibe (7) infolge Drehung des Rotors (2) eingerichtet ist, Fluid durch die Hohlwelle (4) anzusaugen und durch die Kühlscheibe (7), den ersten Fluidraum (15) und weiter durch die Fluidkanäle (16) zu fördern.

2. Elektrische Maschine (1) nach Anspruch 1, wobei zur Ausbildung eines geschlossenen Kühlkreislaufes die elektrische Maschine (1)
a) einen zweiten Fluidraum (17) umfasst, der an Enden der Fluidkanäle (16) angeordnet ist, und wobei die Kühlscheibe (7) infolge Drehung des Rotors (2) weiter eingerichtet ist, das Fluid aus den Fluidkanälen (16) weiter durch den zweiten Fluidraum (17) und wieder durch die Hohlwelle (4) zu fördern oder
b) an jedem Ende der Fluidkanäle (16) eine Auslassöffnung (24) angeordnet ist, und mindestens eine Einlassöffnung (25) in einem Deckel (23) der elektrischen Maschine (1) angeordnet ist, wobei jeweils eine Leitung (40) eine Auslassöffnung (24) mit der Einlassöffnung (25) verbindet, und wobei die Kühlscheibe (7) infolge Drehung des Rotors (2) weiter eingerichtet ist, das Fluid aus den Fluidkanälen (16) weiter durch die jeweilige Leitung (40) und wieder durch die Hohlwelle (4) zu fördern.

3. Elektrische Maschine (1) nach Anspruch 1, wobei zur Ausbildung eines offenen Kühlkreislaufes die elektrische Maschine (1) Auslassöffnungen (24) und mindestens eine Einlassöffnung (25) in einem Deckel (23) der elektrischen Maschine (1) umfasst, und wobei die Kühlscheibe (7) infolge Drehung des Rotors (2) weiter eingerichtet ist,
- das Fluid durch die Fluidkanäle (16) aus der elektrischen Maschine (1) zu fördern oder das Fluid aus den Fluidkanälen (16) weiter durch die Auslassöffnungen (24), die an Enden der Fluidkanäle (16) oder im Deckel (23) angeordnet sind, zu fördern, und
- frisches Fluid von außerhalb der elektrischen Maschine (1) durch mindestens eine Einlassöffnung (25) durch die Hohlwelle (4) zu fördern.

4. Elektrische Maschine (1) nach einem der vorherstehenden Ansprüche, wobei die Kühlscheibe (7) eingerichtet ist, Abwärme, die am Laufrad (10) infolge äußerer Hitze- oder Wärmeeinwirkung entsteht, an das Fluid abzugeben, und wobei die Kühlscheibe (7) infolge Drehung des Rotors (2), der erste Fluidraum (15), die Fluidkanäle (16) und/oder der zweite Fluidraum (17) eingerichtet sind, das erhitzte Fluid abzukühlen.

5. Elektrische Maschine (1) nach einem der vorherstehenden Ansprüche, wobei die Fluidkanäle (16) parallel, orthogonal oder schräg zur Hohlwelle (4) in der elektrischen Maschine (1) angeordnet sind.

6. Elektrische Maschine (1) nach einem der vorherstehenden Ansprüche, wobei die Anzahl der Fluidkanäle (16) größer/gleich als 2 ist, vorzugsweise größer/gleich 12 ist, bevorzugt größer/gleich 18 ist.

7. Elektrische Maschine (1) nach einem der vorherstehenden Ansprüche, wobei die Kühlscheibe (7) radiale Fluideintrittsöffnungen (8) und radiale und/oder axiale Fluidaustrittsöffnungen (9) aufweist und wobei das Laufrad (10) radial angeordnete Leitbleche, Schaufeln oder Führungselemente aufweist.

8. Elektrische Maschine (1) nach einem der vorherstehenden Ansprüche, wobei die Kühlscheibe (7) infolge Drehung des Rotors (2) eingerichtet ist, eine Fluidförderung resultierend aus Euler Arbeit oder Eulerscher Gleichung zu erzeugen.

9. Elektrische Maschine (1) nach einem der vorherstehenden Ansprüche, wobei die elektrische Maschine (1) eingerichtet ist, eine Temperatur im Bereich von bis zu 180°C im Bereich der Kühlscheibe (7), infolge Abwärme, die am Laufrad (10) infolge äußerer Hitze- oder Wärmeeinwirkung entsteht, auf bis zu 60°C in den Fluidkanälen (16) und vorzugweise in wenigstens einem der Fluidräume (15, 17) und weiter vorzugsweise in der Hohlwelle (4) zu reduzieren.

10. Vorrichtung umfassend mindestens eine elektrische Maschine (1) gemäß einem der vorherstehenden Ansprüche.
